# EUROPEAN PATENT SPECIFICATION

(11) **EP 4 703 702 B1**
(45) Date of publication and mention of the grant of the patent: **21.10.2026**
(21) Application number: 25188783.2
(22) Date of filing: 10.07.2025
(51) Int. Cl.: G01M 17/007

(54) **VEHICLE INSPECTION SYSTEM AND CONTROL METHOD FOR VEHICLE INSPECTION SYSTEM**
FAHRZEUGINSPEKTIONSSYSTEM UND STEUERUNGSVERFAHREN FÜR FAHRZEUGINSPEKTIONSSYSTEM
SYSTÈME D'INSPECTION DE VÉHICULE ET PROCÉDÉ DE COMMANDE POUR SYSTÈME D'INSPECTION DE VÉHICULE

(30) Priority: 03.09.2024 JP 2024151197
(43) Date of publication of application: 04.03.2026
(73) Proprietor: TOYOTA JIDOSHA KABUSHIKI KAISHA, Toyota-shi, Aichi-ken 471-8571 (JP)
(72) Inventor: KOIDE, Toshihiro, Toyota-shi, 471-8571 (JP); SHIMIZU, Koji, Toyota-shi, 471-8571 (JP); KOYAMA, Keisuke, Toyota-shi, 471-8571 (JP); IWAHORI, Kento, Toyota-shi, 471-8571 (JP)
(74) Representative: J A Kemp LLP

(56) References cited:
- KR-A- 20240 128 940
- US-A1- 2021 287 460

## Description

### BACKGROUND

### FIELD

The present disclosure relates to a vehicle inspection system and a control method for the vehicle inspection system.

### RELATED ART

Conventionally, there have been known vehicles that run autonomously or by remote control (Japanese Unexamined Patent Application Publication (Translation of PCT Application) No. 2017-538619).

There is a case where a vehicle is inspected using an inspection facility such as a drum tester or a brake tester including roller that rotates while supporting a wheel of the vehicle. According to this inspection, the wheel is rotated by a driving force of the roller, or the roller is rotated by a driving force of the wheel. The inventors of the present disclosure have found out that, when a vehicle is inspected using running of the vehicle by unmanned driving, if a difference is produced between a circumferential speed of the roller and a circumferential speed of the wheel, the wheel is likely to deviate from the roller. A vehicle inspection system comprising a position adjustment device included in the prior art is disclosed in US2021/287460 A1.

### SUMMARY

The present disclosure can be implemented as following aspects.
(1) According to the one aspect of the present disclosure, a vehicle inspection system is provided. The vehicle inspection system includes: a vehicle being capable of running by unmanned driving; an inspection facility that includes a roller that rotates while supporting a wheel of the vehicle; a sensor that outputs sensor information for detecting that the wheel is likely to deviate from the roller; a detection unit that detects using the sensor information that the wheel is likely to deviate from the roller; and a control unit that, when it is detected that the wheel is likely to deviate from the roller, controls at least one of wheel circumferential speed and roller circumferential speed to reduce a difference between the wheel circumferential speed and the roller circumferential speed, the wheel circumferential speed being circumferential speed of the wheel, the roller circumferential speed being circumferential speed of the roller. According to this aspect, when a vehicle is inspected using running of the vehicle by unmanned driving, the detection unit can detect using the sensor information that the wheel is likely to deviate from the roller. When it is detected that the wheel is likely to deviate from the roller, the control unit controls the circumferential speed of at least one of the wheel and the roller to reduce the difference between the wheel circumferential speed and the roller circumferential speed, so that it is possible to prevent the wheel from deviating from the roller. Consequently, the vehicle inspection system can reduce the likelihood that the wheel deviate from the roller, and the vehicle contacts other objects.
(2) According to the above aspect, when it is detected that the wheel is likely to deviate from the roller due to the roller's rotation being stopped during inspection in which the roller is rotated by a driving force of the wheel, and then it is detected that the wheel is likely to deviate from the roller, the control unit may reduce the difference between the wheel circumferential speed and the roller circumferential speed by decreasing the wheel circumferential speed. According to this aspect, when the roller stops rotating during inspection in which the roller is rotated by the driving force of the wheel, the control unit can reduce the difference between the wheel circumferential speed and the roller circumferential speed by decreasing the wheel circumferential speed, and prevent the wheel from deviating from the roller.
(3) According to the above aspect, when it is detected that the wheel is likely to deviate from the roller due to the wheel's rotation in circumferential speed different from a predetermined reference circumferential speed during inspection in which the wheel is rotated by driving force of the roller, and then it is detected that the wheels are likely to deviate from the rollers, the control unit may reduce the difference between the wheel circumferential speed and the roller circumferential speed by controlling the roller circumferential speed according to the wheel circumferential speed. According to this aspect, when the wheel rotates at the different circumferential speed from the reference circumferential speed during the inspection in which the wheel is rotated by the driving force of the roller, the control unit can achieve the following. The control unit can reduce the difference between the wheel circumferential speed and the roller circumferential speed by controlling the roller circumferential speed according to the wheel circumferential speed, and prevent the wheel from deviating from the roller.
(4) According to the above aspect, when it is detected that the wheel is likely to deviate from the roller, the control unit may reduce the difference between the wheel circumferential speed and the roller circumferential speed by controlling the circumferential speed of a control target that is the wheel or the roller such that a change rate of the circumferential speed of the control target falls within a predetermined reference range. According to this aspect, the control unit can moderately change the circumferential speed of the control target without rapidly changing the circumferential speed of the control target. Consequently, it is possible to avoid a rapid change in the circumferential speed of the control target, thereby preventing the wheel from readily deviating from the roller.
(5) According to the above aspect, the sensor may include an acceleration sensor that measures acceleration of the vehicle and outputs the acceleration as the sensor information, and the detection unit may detect using the acceleration that the wheels are likely to deviate from the rollers. According to this aspect, the detection unit can detect using the acceleration of the vehicle that the wheel is likely to deviate from the rollers.
(6) According to the above aspect, the sensor may include a turning angle sensor that measures an actual turning angle of the vehicle and outputs the actual turning angle as the sensor information, and the detection unit may detect using the actual turning angle that the wheel is likely to deviate from the roller. According to this aspect, the detection unit can detect using the actual turning angle of the vehicle that the wheel is likely to deviate from the roller.
(7) According to the above aspect, the sensor may include a laser sensor that detects that an object has entered a predetermined detection range, and outputs a detection result as the sensor information, and the detection unit may detect using the detection result that the wheels are likely to deviate from the roller. According to this aspect, the detection unit can detect using the detection result of the laser sensor that the wheels is likely to deviate from the roller.
(8) According to the above aspect, the sensor may include a photoelectric sensor that detects that an object exists on a beam by emitting the beam to a predetermined position, and outputs a detection result as the sensor information, and the detection unit may detect using the detection result that the wheel is likely to deviate from the roller. According to this aspect, the detection unit can detect using the detection result of the photoelectric sensor that the wheel is likely to deviate from the roller.
(9) According to the above aspect, the sensor may include a sensor that outputs the sensor information usable for acquiring a position of the vehicle, and the detection unit may detect using the position of the vehicle acquired by using the sensor information that the wheel is likely to deviate from the roller. According to this aspect, the detection unit can detect using the position of the vehicle acquired by using the sensor information that the wheel is likely to deviate from the roller.
(10) According to the above aspect, the sensor may comprise a plurality of sensors, and the detection unit may detect using the sensor information output from each of the plurality of sensors that the wheel is likely to deviate from the roller. According to this aspect, the detection unit can detect using the sensor information output from each of the plurality of sensors that the wheel is likely to deviate from the roller. Consequently, the detection unit can more reliably detect that the wheel is likely to deviate from the roller.
(11) Another aspect according to the present disclosure provides a control method. The control method includes: detecting that a wheel is likely to deviate from a roller that rotates while supporting the wheel of a vehicle being capable of running by unmanned driving; and controlling, when it is detected that the wheels are likely to deviate from the rollers, at least one of wheel circumferential speed and roller circumferential speed to reduce a difference between the wheel circumferential speed and the roller circumferential speed, the wheel circumferential speed being circumferential speed of the wheel and the roller circumferential speed being circumferential speed of the roller. According to this aspect, by executing the detecting and the controlling in this order, it is possible to detect that the wheel is likely to deviate from the roller, and reduce the difference between the wheel circumferential speed and the roller circumferential speed. Consequently, it is possible to prevent the wheel from deviating from the roller.

The present disclosure can be implemented as various aspects other than the above vehicle inspection system and control method for the vehicle inspection system. For example, the present disclosure can be implemented as, for example, aspects such as a manufacturing method for the vehicle inspection system, a computer program for implementing the control method for the vehicle inspection system, and a non-transitory recording medium having this computer program recorded thereon.

### BRIEF DESCRIPTION OF DRAWINGS

FIG. 1 is a conceptual view illustrating a configuration of a vehicle inspection system according to a first embodiment;
FIG. 2 is a block diagram illustrating the configuration of the vehicle inspection system according to the first embodiment;
FIG. 3 is a view illustrating a configuration of an inspection facility according to the first embodiment;
FIG. 4 is a flowchart illustrating a remote control method of a vehicle;
FIG. 5 is a flowchart illustrating a first control method;
FIG. 6 is a flowchart illustrating a second control method;
FIG. 7 is an explanatory view illustrating a schematic configuration of the vehicle inspection system according to a second embodiment;
FIG. 8 is a view illustrating the configuration of the inspection facility according to the second embodiment; and
FIG. 9 is a flowchart illustrating an autonomous control method of the vehicle.

### DETAILED DESCRIPTION

### A. First Embodiment

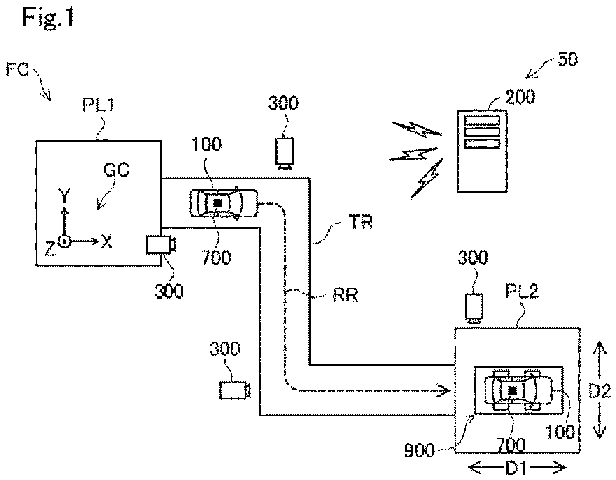

FIG. 1 is a conceptual view illustrating a configuration of a vehicle inspection system 50 according to a first embodiment. The vehicle inspection system 50 includes one or more vehicles 100 that are moving objects, a server 200, one or more external sensors 300, a detection sensor 700, and an inspection facility 900.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, a combat vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the vehicle inspection system 50 is used in a factory FC that manufactures the vehicles 100 to inspect the manufactured vehicles 100. That is, in the present embodiment, the vehicle inspection system 50 is used for new inspection of the vehicles 100 defined in the Road Transport Vehicle Act. New inspection is inspection performed to newly use the vehicles 100. The new inspection is also referred to as completion inspection. In the present embodiment, the reference coordinate system of the factory FC is a global coordinate system GC and a location in the factory can be expressed by X, Y, and Z coordinates in the global coordinate system GC. The factory FC includes a first place PL1 and a second place PL2. The first place PL1 and the second place PL2 are connected by a track TR on which the vehicle 100 is able to run. In the factory FC, a plurality of the external sensors 300 are installed along the track TR. The position of each external sensor 300 in the factory FC is adjusted in advance. The vehicle 100 moves from the first place PL1 to the second place PL2 through the track TR by unmanned driving. The vehicle 100 is inspected using the inspection facility 900 installed at the second place PL2.

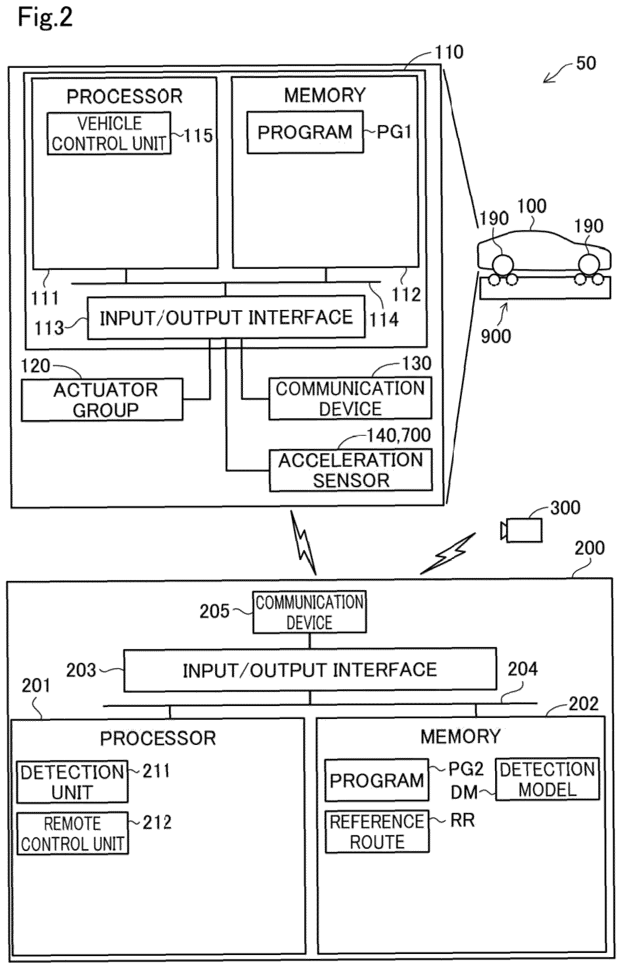

FIG. 2 is a block diagram illustrating the configuration of the vehicle inspection system 50 according to the first embodiment. The vehicle 100 includes a vehicle control device 110 that controls each unit of the vehicle 100, an actuator group 120 that includes one or more actuators that are driven under control of the vehicle control device 110, and a communication device 130 that communicates with an external device such as the server 200 by wireless communication. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 is configured as a computer that includes a processor 111, a memory 112, an input/output interface 113, and an internal bus 114. The processor 111, the memory 112, and the input/output interface 113 are connected to enable bidirectional communication via the internal bus 114. The input/output interface 113 is connected with the actuator group 120 and the communication device 130. The processor 111 implements various functions including the function of the vehicle control unit 115 by executing a program PG1 stored in the memory 112.

The vehicle control unit 115 causes the vehicle 100 to run by controlling the actuator group 120. The vehicle control unit 115 can cause the vehicle 100 to run by controlling the actuator group 120 using a running control signal received from the server 200. The running control signal is a control signal for causing the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The detection sensor 700 outputs sensor information for detecting that wheel 190 is likely to deviate from a roller 91. The sensor information is, for example, information related to an operation of the vehicle 100. Examples of the information related to the operation of the vehicle 100 include information indicating a physical quantity related to the vehicle 100, a behavior of the wheels 190 on the rollers 91, and displacement of positioning points of the vehicle 100. In the present embodiment, the detection sensor 700 is an acceleration sensor 140 that is mounted on the vehicle 100. The acceleration sensor 140 measures acceleration applied to the vehicle 100 and outputs the acceleration of the vehicle 100 as the sensor information. The acceleration sensor 140 is, for example, a uniaxial acceleration sensor that can measure an acceleration applied to a front/rear direction D1 of the vehicle 100. In this case, the acceleration sensor 140 is attached to the vehicle 100 such that the axis of the acceleration sensor 140 lies along the front/rear direction D1 of the vehicle 100.

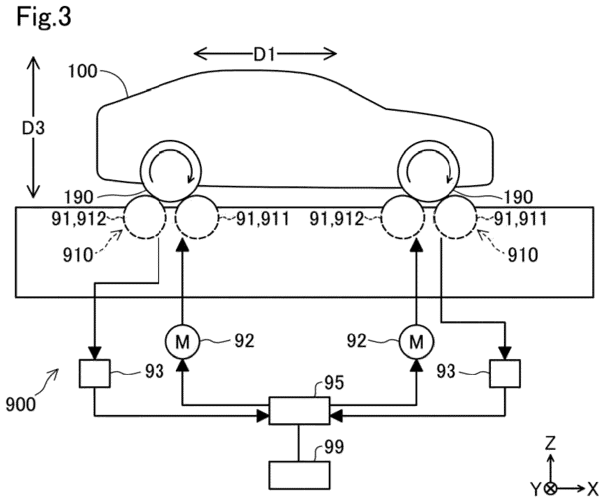

FIG. 3 is a view illustrating a configuration of the inspection facility 900 according to the first embodiment. The inspection facility 900 includes the roller 91, motors 92, circumferential speed sensors 93, a roller control device 95, and a communication device 99. The roller 91 is provided in a plural.

The rollers 91 rotate while supporting the wheels 190. The roller 91 is also referred to as drum. The rollers 91 can rotate about the center axis extending in a left/right direction D2 of the vehicle 100. In the present embodiment, a roller unit 910 including a plurality of the rollers 91 is provided for each wheel 190. The roller unit 910 according to the present embodiment includes a main roller 911 and a sub roller 912 that are the rollers 91 that can sandwich the wheel 190. The main roller 911 and the sub roller 912 are disposed facing each other along the front/rear direction D1 of the vehicle 100. In a case where, for example, the vehicle 100 is a four-wheeled car, the inspection facility 900 includes the four roller units 910 of a first front roller unit, a second front roller unit, a first rear roller unit, and a second rear roller unit in total. Hence, in this case, the inspection facility 900 includes the eight rollers 91 in total. The main roller 911 and the sub roller 912 of the first front roller unit rotate while supporting a left front wheel of the vehicle 100. The main roller 911 and the sub roller 912 of the second front roller unit rotate while supporting a right front wheel of the vehicle 100. The main roller 911 and the sub roller 912 of the first rear roller unit rotate while supporting a left rear wheel of the vehicle 100. The main roller 911 and the sub roller 912 of the second rear roller unit rotate while supporting a right rear wheel of the vehicle 100. Hereinafter, in a case where the main roller 911 and the sub roller 912 do not need to be distinguished, each of the main roller 911 and the sub roller 912 will be referred to simply as the "roller 91".

The motor 92 rotates the roller 91. In the present embodiment, the motor 92 is provided for each roller 91. The circumferential speed sensor 93 detects a roller circumferential speed that is a circumferential speed of the roller 91. A unit of the roller circumferential speed is, for example, km/h. In the present embodiment, the circumferential speed sensor 93 is provided for each roller 91. The roller control device 95 controls the roller circumferential speed by controlling operations of the motors 92. In the present embodiment, the roller control device 95 can control the roller circumferential speed by controlling the motors 92 using a roller control signal received from the server 200. The roller control signal is a control signal for controlling the roller circumferential speed. The communication device 99 communicates with an external device such as the server 200 by wireless communication.

According to inspection that uses the inspection facility 900, the vehicle 100 is inspected in a state where the wheels 190 are placed on the rollers 91. The inspection facility 900 is, for example, a brake tester. The brake tester is used to inspect braking performance of the vehicle 100. According to inspection that uses the brake tester, the brake tester rotates the wheels 190 by the driving force of the rollers 91 in a state where a shift position of the vehicle 100 is set to a neutral range. Furthermore, the vehicle 100 decreases the wheel circumferential speed that is a circumferential speed of the wheels 190 by applying a predetermined braking force to each wheel 190. A unit of the wheel circumferential speed is, for example, km/h. In this way, the braking force of the braking device is inspected. When both of the inspection facility 900 and the vehicle 100 are normally operating, as the roller circumferential speed is increased by the driving force of the rollers 91, the wheel circumferential speed increases. As the wheel circumferential speed is decreased by the braking force of the vehicle 100, the roller circumferential speed decreases. That is, during inspection in which the wheel 190 is rotated by the driving force of the roller 91, the wheel circumferential speed and the roller circumferential speed link.

The inspection facility 900 may be, for example, a drum tester. The brake tester is used to inspect driving performance of the vehicle 100. According to inspection that uses the roller tester, the vehicle 100 rotates the rollers 91 at the predetermined circumferential speeds by the driving force of the wheels 190 in a state where the shift position of the vehicle 100 is set to a drive range. Based on a difference between a running speed of the vehicle 100 calculated using the roller circumferential speed output from the circumferential speed sensors 93, and a speed displayed on a speedometer, an error of the speedometer with respect to an actual running speed of the vehicle 100 is inspected. When both of the inspection facility 900 and the vehicle 100 are normally operating, as the wheel circumferential speed is increased by the driving force of the wheels 190, the roller circumferential speed increases. As the wheel circumferential speed decreases, the roller circumferential speed decreases. That is, during inspection in which the roller 91 is rotated by the driving force of the wheel 190, the wheel circumferential speed and the roller circumferential speed link.

Note that the inspection facility 900 may be a facility that implements functions of both of the brake tester and the drum tester by integrating the brake tester and the drum tester. Furthermore, usage of the inspection facility 900 is not limited to the above. The brake tester as the inspection facility 900 may be used to inspect, for example, an operation of an anti-lock braking system.

Here, when the roller 91 is locked and the roller 91 stops rotating during inspection in which the roller 91 is rotated by the driving force of the wheel 190, the wheel circumferential speed may become higher than the roller circumferential speed. Furthermore, when the wheel 190 is locked and the wheel 190 stops rotating during inspection in which the wheels 190 is rotated by the driving force of the roller 91, the roller circumferential speed may become higher than the wheel circumferential speed. When a higher braking force than a predetermined braking force is applied to the wheel 190 during inspection in which the wheels 190 is rotated by the driving force of the roller 91, the wheel circumferential speed may decrease compared to a scheduled wheel circumferential speed. At this time, the roller circumferential speed may be maintained at a predetermined circumferential speed. When the wheel circumferential speed decreases compared to the scheduled wheel circumferential speed, and the roller circumferential speed is maintained at the predetermined circumferential speed, the roller circumferential speed may become higher than the wheel circumferential speed. Furthermore, when the shift position of the vehicle 100 unintentionally switches from the neutral range to a parking range during inspection in which the wheel 190 is rotated by the driving force of the roller 91, the wheel circumferential speed may decrease compared to the scheduled wheel circumferential speed. At this time, the roller circumferential speed may be maintained at the predetermined circumferential speed. When the wheel circumferential speed decreases compared to the scheduled wheel circumferential speed, and the roller circumferential speed is maintained at the predetermined circumferential speed, the roller circumferential speed may become higher than the wheel circumferential speed. Furthermore, when the shift position of the vehicle 100 unintentionally switches from the neutral range to the drive range during inspection in which the wheel 190 is rotated by the driving force of the rollers 91, the wheel circumferential speed may increase compared to the scheduled wheel circumferential speed. At this time, the roller circumferential speed may be maintained at the predetermined circumferential speed. When the wheel circumferential speed increases compared to the scheduled wheel circumferential speed, and the roller circumferential speed is maintained at the predetermined circumferential speed, the wheel circumferential speed may become higher than the roller circumferential speed. As described above, a difference may be produced between the roller circumferential speed and the wheel circumferential speed. When the difference is produced between the roller circumferential speed and the wheel circumferential speed, the wheels 190 is likely to deviate from the roller 91. It is concerned that, when the wheel 190 deviate from the roller 91, the vehicle 100 contacts other objects.

Hence, when it is detected that the wheel 190 is likely to deviate from the roller 91, the server 200 reduces the difference between the wheel circumferential speed and the roller circumferential speed. This reduces the likelihood that the wheel 190 deviates from the roller 91, and the vehicle 100 contacts other objects. Note that the likelihood that the wheel 190 deviates from the roller 91 include at least one of a likelihood that the wheel 190 deviates from the roller 91 to the front/rear direction D1 of the vehicle 100, and a likelihood that the wheel 190 deviates from the roller 91 to the left/right direction D2 of the vehicle 100.

As illustrated in FIG. 2, the server 200 is configured as a computer that includes a processor 201, a memory 202, an input/output interface 203, and an internal bus 204. The processor 201, the memory 202, and the input/output interface 203 are connected to enable bidirectional communication via the internal bus 204. The input/output interface 203 is connected with a communication device 205 for communicating with various devices outside the server 200. The communication device 205 can communicate with the vehicle 100 by wireless communication, and can communicate with each external sensor 300 by wired communication or wireless communication. The processor 201 implements various functions including functions of a detection unit 211 and a remote control unit 212 by executing a program PG2 stored in the memory 202.

The detection unit 211 detects using the sensor information output from the detection sensor 700 that the wheel 190 is likely to deviate from the roller 91. According to the present embodiment, using the acceleration of the vehicle 100 that is the sensor information output from the acceleration sensor 140 mounted on the vehicle 100, the detection unit 211 detects that the wheel 190 is likely to deviate from the roller 91. More specifically, as described above, when both of the inspection facility 900 and the vehicle 100 are normally operating, the wheel circumferential speed and the roller circumferential speed link. Hence, when both of the inspection facility 900 and the vehicle 100 are normally operating, an acceleration applied to the vehicle 100 is close to zero. However, when a difference is produced between the wheel circumferential speed and the roller circumferential speed, and the wheel 190 deviates from the roller 91, the acceleration applied to the vehicle 100 increases compared to the case where both of the inspection facility 900 and the vehicle 100 are normally operating. Accordingly, the detection unit 211 can detect a sign using the acceleration applied to the vehicle 100 that the wheel 190 deviates from the roller 91. Hence, in the present embodiment, when the acceleration of the vehicle 100 is outside a predetermined threshold range, the detection unit 211 detects that the wheel 190 is likely to deviate from the roller 91. Note that the detection unit 211 may further output from an unillustrated output device a fact that the likelihood of deviation of the wheels 190 has been detected. The output device is, for example, a display device such as a monitor or a notification device such as a speaker.

The remote control unit 212 acquires detection results of the external sensors 300, generates a running control signal for controlling the actuator group 120 of the vehicle 100 using the detection results, transmits the running control signal to the vehicle 100, and thereby causes the vehicle 100 to run by remote control. When the wheel 190 is rotated by the driving force of the roller 91, the remote control unit 212 generates a roller control signal for rotating the roller 91 at a predetermined roller circumferential speed, and transmits the roller control signal to the inspection facility 900. Thus, the remote control unit 212 rotates the roller 91 by remote control.

Furthermore, when it is detected that the wheel 190 is likely to deviate from the roller 91, the remote control unit 212 controls the circumferential speed of at least one of the wheel 190 and the roller 91 to reduce the difference between the wheel circumferential speed and the roller circumferential speed. When the wheel 190 rotates at a circumferential speed different from the reference circumferential speed during the inspection in which the wheel 190 is rotated by the driving force of the roller 91, and then the likelihood of deviation of the wheel 190 from roller 91 is detected, the remote control unit 212 performs the following. The remote control unit 212 controls the roller circumferential speed according to the wheel circumferential speed. More specifically, when the roller circumferential speed is higher than the wheel circumferential speed, the remote control unit 212 decreases the roller circumferential speed. When the roller circumferential speed is lower than the wheel circumferential speed, the remote control unit 212 increases the roller circumferential speed. Furthermore, when the roller 91 stops rotating during the inspection of rotating the roller 91 by the driving force of the wheel 190, and then it is detected that the wheel 190 is likely to deviate from the roller 91, the remote control unit 212 performs the following. The remote control unit 212 decreases the wheel circumferential speed. At this time, when a braking force at a time when the likelihood of deviation of the wheel 190 from the roller 91 is detected is zero, the remote control unit 212 decreases the wheel circumferential speed by increasing the braking force of the vehicle 100 from zero. On the other hand, when a braking force at a time when the likelihood of deviation of the wheel 190 from the roller 91 is detected is not zero, the remote control unit 212 decreases the wheel circumferential speed by increasing the braking force of the vehicle 100 from a current braking force. The current braking force can be estimated based on, for example, a last running control signal transmitted from the server 200 to the vehicle 100. In this way, the remote control unit 212 reduces the difference between the wheel circumferential speed and the roller circumferential speed.

The external sensor 300 is a sensor located outside the vehicle 100. The external sensors 300 according to the present embodiment are sensors that capture the vehicle 100 from the outside of the vehicle 100. The external sensor 300 includes a communication device (not illustrated), and can communicate with another device such as the server 200 by wired communication or wireless communication.

Specifically, the external sensor 300 is configured by a camera. The camera as the external sensor 300 captures the vehicle 100 and outputs a captured image as a detection result.

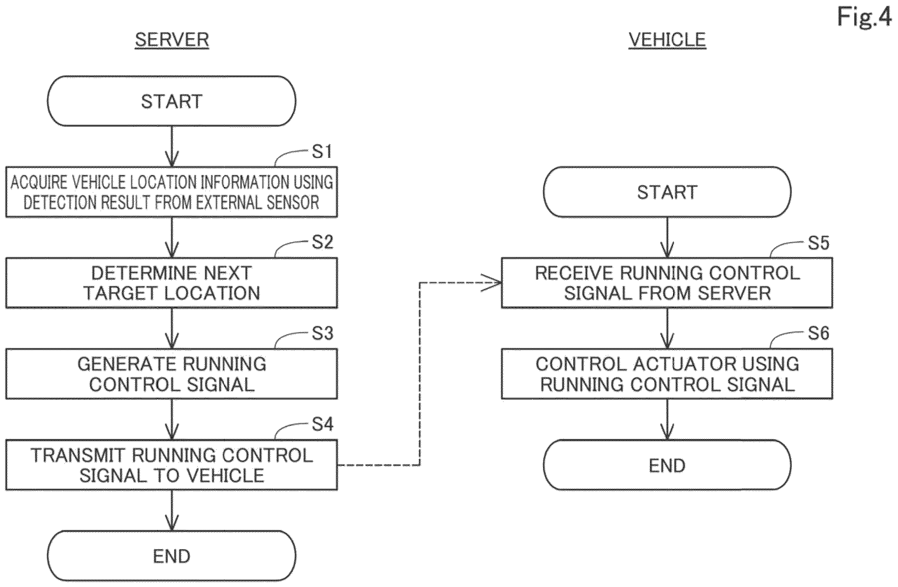

FIG. 4 is a flowchart showing a processing procedure for running control of the vehicle 100 in the first embodiment. In a processing procedure in FIG. 4, the processor 201 of the server 200 functions as the remote control unit 212 by executing the program PG2. Furthermore, the processor 111 of the vehicle 100 functions as the vehicle control unit 115 by executing the program PG1.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the vehicle inspection system 50 or outside the vehicle inspection system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the vehicle inspection system 50 in the present embodiment, it becomes possible to move the vehicle 100 without using a transport unit such as a crane or a conveyor.

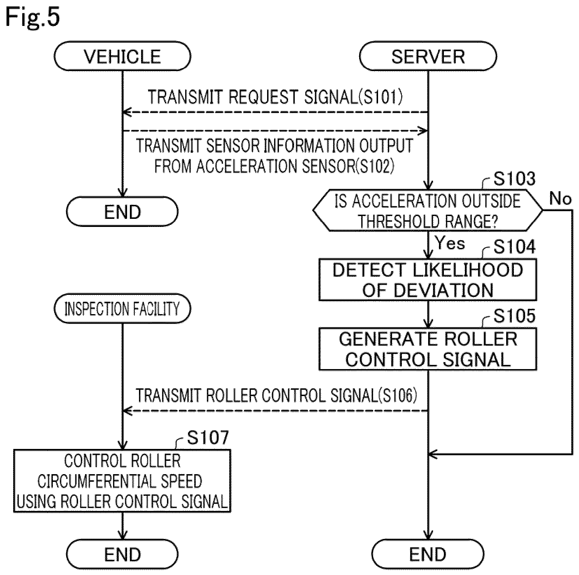

FIG. 5 is a flowchart illustrating a control method of the vehicle inspection system 50 at a time of inspection of rotating the wheels 190 by the driving force of the rollers 91. The control method illustrated in FIG. 5 is repeatedly executed at a predetermined cycle in, for example, a period from a start point of time to an end point of time of the inspection.

In step S101, the server 200 transmits to the vehicle 100 a request signal for acquiring sensor information output from the acceleration sensor 140. In step S102, the vehicle 100 having received the request signal transmits to the server 200 the sensor information output from the acceleration sensor 140. In a case where the acceleration of the vehicle 100 is within the threshold range (step S103: No), the server 200 ends this flow. On the other hand, in a case where the acceleration of the vehicle 100 is outside the threshold range (step S103: Yes), the server 200 detects in step S104 that the wheel 190 is likely to deviate from the roller 91. In step S105, the server 200 generates a roller control signal for controlling a roller circumferential speed according to a wheel circumferential speed. In step S106, the server 200 transmits the generated roller control signal to the inspection facility 900. In step S107, the inspection facility 900 having received the roller control signal rotates the rollers 91 at a circumferential speed matching the wheel circumferential speed by controlling the motors 92 using the received roller control signal. In this way, the vehicle inspection system 50 reduces the difference between the wheel circumferential speed and the roller circumferential speed.

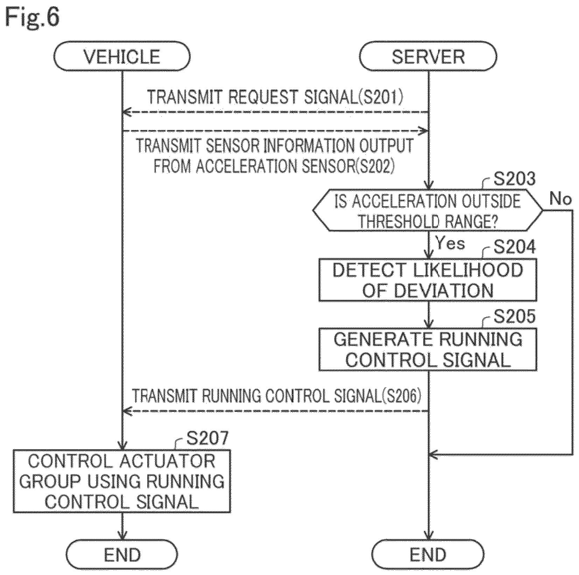

FIG. 6 is a flowchart illustrating the control method of the vehicle inspection system 50 at the time of the inspection of rotating the rollers 91 by the driving force of the wheels 190. The control method illustrated in FIG. 6 is repeatedly executed at a predetermined cycle in, for example, a period from a start point of time to an end point of time of the inspection.

In step S201, the server 200 transmits to the vehicle 100 a request signal for acquiring sensor information output from the acceleration sensor 140. In step S202, the vehicle 100 having received the request signal transmits to the server 200 the sensor information output from the acceleration sensor 140. In a case where the acceleration of the vehicle 100 is within the threshold range (step S203: No), the server 200 ends this flow. On the other hand, in a case where the acceleration of the vehicle 100 is outside the threshold range (step S203: Yes), the server 200 detects in step S204 that the wheel 190 is likely to deviate from the roller 91. In step S205, the server 200 generates a running control signal for decreasing the wheel circumferential speed. In step S206, the server 200 transmits the generated running control signal to the vehicle 100. The vehicle 100 having received the running control signal decreases the wheel circumferential speed by controlling the actuator group 120 using the received running control signal. In this way, the vehicle inspection system 50 reduces the difference between the wheel circumferential speed and the roller circumferential speed.

According to the above first embodiment, when the vehicle 100 is inspected using running of the vehicle 100 by unmanned driving, the detection unit 211 of the server 200 can detect using the sensor information that the wheel 190 is likely to deviate from the roller 91. Furthermore, in a case where it has been detected that the wheel 190 is likely to deviate from the roller 91, the remote control unit 212 of the server 200 can achieve the following. The remote control unit 212 can generate a control signal for controlling the circumferential speed of at least one of the wheel 190 and the roller 91 to reduce the difference between the wheel circumferential speed and the roller circumferential speed, and prevent the wheel 190 from deviating from the roller 91 by transmitting the control signal to a control target. Consequently, the vehicle inspection system 50 can reduce by remote control the likelihood that the wheel 190 deviates from the roller 91, and the vehicle 100 contacts other objects.

Furthermore, according to the above first embodiment, by executing the detection process and the control process in this order, it is possible to detect that the wheel 190 is likely to deviate from the roller 91, and reduce the difference between the wheel circumferential speed and the roller circumferential speed. Consequently, it is possible to prevent the wheel 190 from deviating from the roller 91. Note that the detection process is a process of detecting that the wheel 190 is likely to deviate from the roller 91 that rotates while supporting the wheel 190 of the vehicle 100 that is capable of running by unmanned driving. The detection process corresponds to step S101 to step S104 in FIG. 5 and step S201 to step S204 in FIG. 6. The control process is a process of, when it is detected that the wheel 190 is likely to deviate from the roller 91, controlling the circumferential speed of at least one of the wheel 190 and the roller 91 to reduce the difference between the wheel circumferential speed and the roller circumferential speed. The control process corresponds to step S105 to step S107 in FIG. 5 and step S205 to step S207 in FIG. 6.

Furthermore, according to the above first embodiment, when the roller 91 stops rotating during the inspection in which the roller 91 is rotated by the driving force of the wheel 190, the remote control unit 212 can achieve the following. The remote control unit 212 can reduce the difference between the wheel circumferential speed and the roller circumferential speed by decreasing the wheel circumferential speed, and prevent the wheel 190 from deviating from the roller 91.

Furthermore, according to the above first embodiment, when the wheel 190 rotates at a different circumferential speed from the reference circumferential speed during the inspection in which the wheel 190 is rotated by the driving force of the roller 91, the remote control unit 212 can achieve the following. The remote control unit 212 can reduce the difference between the wheel circumferential speed and the roller circumferential speed by controlling the roller circumferential speed according to the wheel circumferential speed, and prevent the wheel 190 from deviating from the roller 91.

Furthermore, according to the above first embodiment, the vehicle inspection system 50 includes the acceleration sensor 140 as the detection sensor 700. Furthermore, when the acceleration of the vehicle 100 is outside the threshold range, the detection unit 211 can detect that the wheel 190 is likely to deviate from the roller 91. That is, the detection unit 211 can detect using the acceleration of the vehicle 100 that the wheel 190 is likely to deviate from the roller 91.

Furthermore, according to the above first embodiment, the detection sensor 700 may be a uniaxial acceleration sensor that can measure the acceleration applied to the front/rear direction D1 of the vehicle 100. According to such an embodiment, the detection unit 211 can more reliably detect that the wheel 190 is likely to deviate from the roller 91 to the front/rear direction D1 of the vehicle 100.

Note that the acceleration sensor 140 may be the uniaxial acceleration sensor that can measure an acceleration applied to the left/right direction D2 of the vehicle 100. According to such an embodiment, the detection unit 211 can more reliably detect that the wheel 190 is likely to deviate from the roller 91 to the left/right direction D2 of the vehicle 100. Furthermore, the acceleration sensor 140 may be a biaxial acceleration sensor that can measure an acceleration applied to two directions of the front/rear direction D1, the left/right direction D2, and an upper/lower direction D3 of the vehicle 100. According to such an embodiment, the detection unit 211 can more reliably detect that the wheel 190 is likely to deviate from the roller 91. Furthermore, the acceleration sensor 140 may be a triaxial acceleration sensor that can measure an acceleration applied to three directions of the front/rear direction D1, the left/right direction D2, and the upper/lower direction D3 of the vehicle 100. According to such an embodiment, the detection unit 211 can more reliably detect that the wheel 190 is likely to deviate from the roller 91.

Furthermore, according to the above first embodiment, using the sensor information output from the detection sensor 700 mounted in advance on the vehicle 100, the detection unit 211 can detect that the wheel 190 is likely to deviate from the roller 91. Consequently, the vehicle inspection system 50 can detect that the wheel 190 is likely to deviate from the roller 91 without intentionally providing the detection sensor 700 to the outside of the vehicle 100. Accordingly, it is possible to suppress installation cost of the vehicle inspection system 50.

### B. Second Embodiment

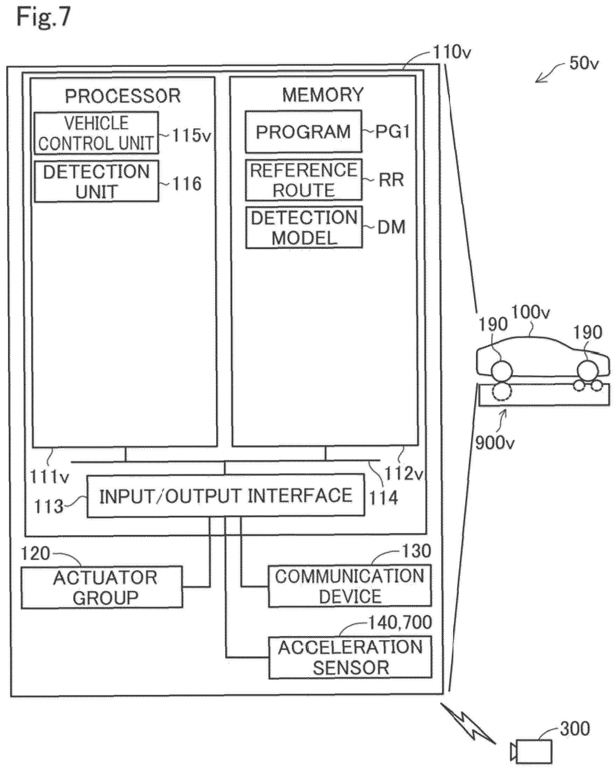

FIG. 7 is an explanatory view illustrating a schematic configuration of a vehicle inspection system 50v according to the second embodiment. The present embodiment differs from the first embodiment in that the vehicle inspection system 50v does not include the server 200. Furthermore, a vehicle 100v according to the present embodiment can run by autonomous control of the vehicle 100v. Furthermore, the present embodiment differs from the first embodiment in components of an inspection facility 900v. The other components are the same as those in the first embodiment unless otherwise specified.

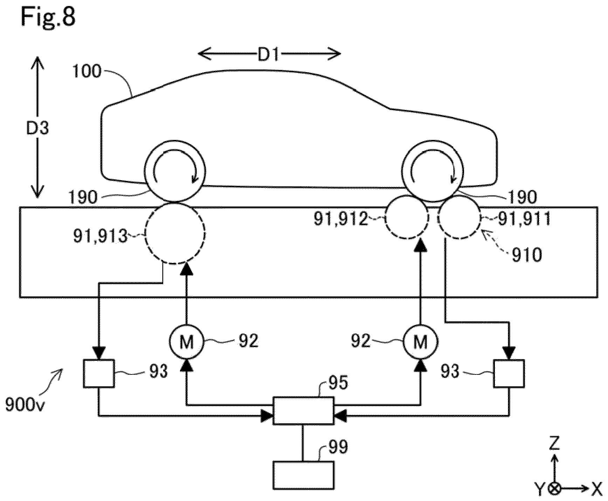

FIG. 8 is a view illustrating a configuration of the inspection facility 900v according to the second embodiment. In the present embodiment, the roller unit 910 including the two rollers 91 of the main roller 911 and the sub roller 912 is provided for each wheel 190 of the front wheels of the vehicle 100v. A single roller 913 that is the one roller 91 is provided for each wheel 190 of the rear wheels of the vehicle 100v. In a case where, for example, the vehicle 100v is a four-wheeled car, the inspection facility 900v includes the six rollers 91 of a first front roller unit, a second front roller unit, a first rear single roller, and a second rear single roller in total. The first front roller unit and the second front roller unit are the same as those in the first embodiment. The first rear single roller rotates while supporting the left rear wheel of the vehicle 100v. The second rear single roller rotates while supporting the right rear wheel of the vehicle 100v. Hereinafter, in a case where the main roller 911, the sub roller 912, and the single roller 913 do not need to be distinguished, each of the main roller 911, the sub roller 912, and the single roller 913 will be referred to simply as the "roller 91".

In the present embodiment, a processor 111v of a vehicle control device 110v functions as a detection unit 116 and a vehicle control unit 115v by executing the program PG1 stored in a memory 112v. The detection unit 211 detects using the sensor information output from the detection sensor 700 that the wheel 190 is likely to deviate from the roller 91. The vehicle control unit 115v acquires output results of the external sensors 300, generates a running control signal using the output results, outputs the generated running control signal, causes the actuator group 120 to operate, and thereby can cause the vehicle 100v to run by autonomous control. Furthermore, when it is detected that the wheel 190 is likely to deviate from the roller 91, the vehicle control unit 115v controls a wheel circumferential speed to reduce a difference between the wheel circumferential speed and a roller circumferential speed. In the present embodiment, in the memory 112v, a detection model DM and a reference route RR are stored in advance in addition to the program PG1.

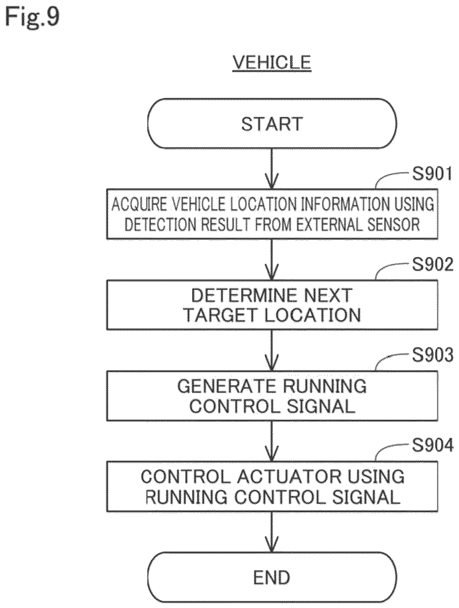

FIG.9 is a flowchart showing a processing procedure for running control of the vehicle 100v in the second embodiment. In a processing procedure in FIG. 9, the processor 111v of the vehicle 100v functions as the vehicle control unit 115v by executing the program PG1.

In step S901, the processor 111v of the vehicle control device 110v acquires vehicle location information using detection result output from the camera as the external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the vehicle inspection system 50v in the present embodiment, it is possible to cause the vehicle 100v to run by autonomous control without controlling the vehicle 100v remotely using the server 200.

According to the above second embodiment, when the vehicle 100v is inspected using running of the vehicle 100v by unmanned driving, the detection unit 211 of the vehicle control device 110v can detect using the sensor information that the wheel 190 is likely to deviate from the roller 91. Furthermore, in a case where it has been detected that the wheels 190 is likely to deviate from the rollers 91, the vehicle control unit 115v of the vehicle control device 110v can achieve the following. The vehicle control unit 115v can generate a running control signal for controlling the wheel circumferential speed to reduce the difference between the wheel circumferential speed and the roller circumferential speed. Furthermore, the vehicle control unit 115v can prevent the wheel 190 from deviating from the roller 91 by controlling the actuator group 120 using a generated running control signal. Hence, the vehicle inspection system 50v can reduce by autonomous control of the vehicle 100v the likelihood that the wheel 190 deviates from the roller 91, and the vehicle 100v contacts other objects.

Furthermore, according to the above second embodiment, using the sensor information output from the detection sensor 700 mounted on the vehicle 100v, the vehicle control device 110v can detect that the wheel 190 is likely to deviate from the roller 91, and control the wheel circumferential speed. That is, when the wheel 190 is likely to deviate from the roller 91, the vehicle control device 110v can control the wheel circumferential speed without exchanging information between the server 200 and the external sensors 300. Consequently, the vehicle inspection system 50v can quickly change the wheel circumferential speed. Consequently, the vehicle inspection system 50v can further prevent the wheel 190 from deviating from the roller 91.

### C. Other Embodiments

(C1) In a case where it has been detected that the wheel 190 is likely to deviate from the roller 91, a control unit, such as the vehicle control unit 115v or the remote control unit 212, may perform the following. In this case, the control unit may reduce the difference between the wheel circumferential speed and the roller circumferential speed by controlling the circumferential speed of a control target that is the wheel 190 or the roller 91 such that a change rate of the circumferential speed of the control target falls within the predetermined threshold range. According to this embodiment, the control unit can moderately change the circumferential speed of the control target without rapidly changing the circumferential speed of the control target. Consequently, it is possible to avoid a rapid change in the circumferential speed of the control target, thereby preventing the wheel 190 from readily deviating from the roller 91.

(C2) The detection sensor 700 may be a turning angle sensor that measures actual turning angles of a vehicle, such as the vehicle 100 or the vehicle 100v, and outputs the actual turning angles of the vehicle as the sensor information. In this case, when a running trajectory of the vehicle determined based on an actual turning angle of the vehicle is outside a predetermined trajectory range, a detection unit, such as the detection unit 116 or the detection unit 211 may detect that the wheel 190 is likely to deviate from the roller 91. According to this embodiment, the detection unit can detect using the actual turning angle of the vehicle that the wheel 190 is likely to deviate from the roller 91.

(C3) The detection sensor 700 may be a laser sensor that detects that an object has entered a predetermined detection range, and outputs a detection result as the sensor information. The laser sensor is installed in advance at a place different from the vehicle. In this case, when the laser sensor detects that a positioning point of the vehicle such as a bumper or a wheel 190, the detection unit may detect that the wheel 190 is likely to deviate from the roller 91. According to this embodiment, the detection unit can detect using the detection results of the laser sensor that the wheel 190 is likely to deviate from the roller 91. Furthermore, according to this embodiment, using the sensor information output from the detection sensor 700 provided at the place different from that of the vehicle, it is possible to detect that the wheel 190 is likely to deviate from the roller 91. Consequently, a vehicle inspection system, such as the vehicle inspection system 50 or the vehicle inspection system 50v can detect that the wheel 190 is likely to deviate from the roller 91 even when the detection sensor 700 is not mounted on the vehicle. Accordingly, the vehicle inspection systems can be used for various types of vehicles. Consequently, it is possible to improve versatility of the vehicle inspection system.

(C4) The detection sensor 700 may be a photoelectric sensor that detects that an object exists on a beam by emitting the beam to a predetermined position, and outputs a detection result as the sensor information. The photoelectric sensor is installed in advance at a place different from the vehicle. In this case, the detection unit may detect based on whether or not a positioning point of the vehicle such as the wheel 190 exists on the beam that the wheel 190 is likely to deviate from the roller 91. According to this embodiment, the detection unit can detect using the detection result of the photoelectric sensor that the wheel 190 is likely to deviate from the roller 91.

(C5) The detection sensor 700 may be a sensor that outputs the sensor information usable for acquiring the position of the vehicle . In this case, when the position of the vehicle is outside a predetermined reference range, the detection unit may detect that the wheel 190 is likely to deviate from the roller 91. According to this embodiment, the detection unit can detect using the position of the vehicle that the wheel 190 is likely to deviate from the roller 91. Furthermore, in this embodiment, the detection sensor 700 may be the external sensor 300 that is installed in advance in the factory FC to cause the vehicle to run by unmanned driving. According to this embodiment, the external sensor 300 also functions as the detection sensor 700, so that the vehicle inspection system can detect that the wheel 190 is likely to deviate from the roller 91 without intentionally providing the dedicated detection sensor 700 to the outside of the vehicles. Accordingly, it is possible to suppress installation cost of the vehicle inspection system.

(C6) The vehicle inspection system may include a plurality of the detection sensors 700. According to this embodiment, the detection unit can detect using the sensor information output from each of the plurality of detection sensors 700 that the wheels 190 is likely to deviate from the roller 91. Consequently, the detection unit can more reliably detect that the wheel 190 is likely to deviate from the roller 91.

(C7) Each roller 91 may be provided for the plurality of wheels 190 that exist along the left/right direction D2 of the vehicle. In a case where, for example, the vehicle is four-wheeled cars, the inspection facility, such as the inspection facility 900 or the inspection facility 900v, may be configured as follows. The inspection facility may each include one front roller unit that supports the left front wheel and the right front wheel of the vehicle, and one rear roller unit that supports the left rear wheel and the right rear wheel of the vehicle. The inspection facility may include one front roller unit that supports the left front wheel and the right front wheel of the vehicle, and one rear single roller that supports the left rear wheel and the right rear wheel of the vehicle. The configuration such as the number, arrangement, and the like of the roller 91 of the inspection facility is not limited to the above.

(C8) The vehicle inspection system may be used for other than new inspection of the vehicle. The vehicle inspection system may be used for continuous inspection of the vehicle defined in the Road Transport Vehicle Act, for example. The continuous inspection is inspection performed to continuously use the vehicle even after an expiration date of an automobile inspection certificate expires. Furthermore, the vehicle inspection system is used for regular inspection defined in the Road Transport Vehicle Act. The regular inspection is inspection that a user of the vehicle is obliged to carry out on a regular basis. The regular inspection is also referred to as legally required inspection. Even according to this embodiment, when it is detected that the wheel 190 is likely to deviate from the roller 91, the vehicle inspection system can reduce the difference between the wheel circumferential speed and the roller circumferential speed. Consequently, the vehicle inspection systems 50 can further prevent the wheel 190 from deviating from the roller 91. Consequently, the vehicle inspection system can reduce the likelihood that the wheel 190 deviates from the roller 91, and the vehicle contacts other objects.

(C9) At least part of the functions of the server 200 may be the functions of a vehicle control device 110, such as the vehicle control device 110 or the vehicle control device 110v, may be the functions of the inspection facility or may be the functions of the external sensor 300. Furthermore, at least part of the functions of the vehicle control device may be the function of the server 200, may be the functions of the inspection facility, or may be the functions of the external sensor 300. According to such an embodiment, it is possible to change the components of the vehicle inspection system as appropriate.

(C10) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server 200 and the vehicle 100 may acquire the vehicle location information through template matching using the three-dimensional point cloud data as the detection result and reference point cloud data, for example.

(C11) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor that is mounted on the vehicle 100. The internal sensor may include, for example, a sensor that detects a driving state of the vehicle 100, a sensor that detects an operation state of each component of the vehicle 100, and a sensor that detects an environment around the vehicle 100. Specifically, the internal sensor may include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(C12) In the above-described second embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.

(C13) In the above-described second embodiment, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the vehicle inspection system 50v may be entirely provided at the vehicle 100v. Specifically, the processes realized by the vehicle inspection system 50v in the present disclosure may be realized by the vehicle 100v alone.

(C14) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(C15) In each of the above-described embodiments, the vehicles 100, 100v are simply required to have a configuration to become movable by unmanned driving. The vehicles 100, 100v may embodied as a platform having the following configuration, for example. The vehicles 100, 100v are simply required to include at least the vehicle control device 110 and the actuator group 120 in order to fulfill three functions including "run," "turn," and "stop" by unmanned driving. In order for the vehicles 100, 100v to acquire information from outside for unmanned driving, the vehicles 100, 100v are simply required to include the communication device 130 further. Specifically, the vehicles 100, 100v to become movable by unmanned driving are not required to be equipped with at least some of interior components such as a driver's seat and a dashboard, are not required to be equipped with at least some of exterior components such as a bumper and a fender or is not required to be equipped with a bodyshell. In such cases, a remaining component such as a bodyshell may be mounted on the vehicles 100, 100v before the vehicles 100, 100v are shipped from the factory FC, or a remaining component such as a bodyshell may be mounted on the vehicles 100, 100v after the vehicles 100, 100v are shipped from the factory FC while the remaining component such as a bodyshell is not mounted on the vehicles 100, 100v. Each of components may be mounted on the vehicles 100, 100v from any direction such as from, from below, from the front, from the back, from the right, or from the left. Alternatively, these components may be mounted from the same direction or from respective different directions. The location determination for the platform may be performed in the same way as for the vehicles 100, 100v in the first embodiments.

(C16) The vehicles 100, 100v may be manufactured by combining a plurality of modules. The module means a unit composed of one or more components grouped according to a configuration or function of the vehicles 100, 100v. For example, each platform of the vehicles 100, 100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicles 100, 100v different from the platform may be modularized. Various modules may include an arbitrary exterior component such as a bumper or a grill, or an arbitrary interior component such as a seat or a console. Not only the vehicles 100, 100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(C17) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The disclosure is not limited to any of the embodiment and its modifications described above but may be implemented by a diversity of configurations without departing from the scope of the invention, as defined by the appended claims. . For example, the technical features of any of the above embodiments and their modifications corresponding to the technical features of each of the aspects described in SUMMARY may be replaced or combined appropriately, in order to solve part or all of the problems described above or in order to achieve part or all of the advantageous effects described above, in so far as the resulting combination of technical features falls within the scope of the appended claims.

## Claims

1. A vehicle (100;100v) inspection system (50;50v) comprising:
a vehicle (100;100v) being capable of running by unmanned driving;
an inspection facility (900;900v) that includes a roller (91) that rotates while supporting a wheel of the vehicle (100;100v);
a sensor that outputs sensor information for detecting that the wheel is likely to deviate from the roller (91);
a detection unit (116;211) that detects using the sensor information that the wheel is likely to deviate from the roller (91); and
a control unit that, when it is detected that the wheel is likely to deviate from the roller (91), controls at least one of wheel circumferential speed and roller (91) circumferential speed to reduce a difference between the wheel circumferential speed and the roller (91) circumferential speed, the wheel circumferential speed being circumferential speed of the wheel, the roller (91) circumferential speed being circumferential speed of the roller (91).

2. The vehicle (100;100v) inspection system (50;50v) according to claim 1, wherein, when it is detected that the wheel is likely to deviate from the roller (91) due to the roller (91)'s rotation being stopped during inspection in which the roller (91) is rotated by driving force of the wheel, the control unit reduces the difference between the wheel circumferential speed and the roller (91) circumferential speed by decreasing the wheel circumferential speed.

3. The vehicle (100;100v) inspection system (50;50v) according to claim 1, wherein, when it is detected that the wheel is likely to deviate from the roller (91) due to the wheel's rotation in circumferential speed different from a predetermined reference circumferential speed during inspection in which the wheel is rotated by driving force of the roller (91), the control unit reduces the difference between the wheel circumferential speed and the roller (91) circumferential speed by controlling the roller (91) circumferential speed according to the wheel circumferential speed.

4. The vehicle (100;100v) inspection system (50;50v) according to claim 1, wherein, when it is detected that the wheel is likely to deviate from the roller (91), the control unit reduces the difference between the wheel circumferential speed and the roller (91) circumferential speed by controlling circumferential speed of a control target that is the wheel or the roller (91) such that a change rate of the circumferential speed of the control target falls within a predetermined reference range.

5. The vehicle (100;100v) inspection system (50;50v) according to claim 1, wherein
the sensor includes an acceleration sensor (140) that measures acceleration of the vehicle (100;100v) and outputs the acceleration as the sensor information, and
the detection unit (116;211) detects using the acceleration that the wheel is likely to deviate from the roller (91).

6. The vehicle (100;100v) inspection system (50;50v) according to claim 1, wherein
the sensor includes a turning angle sensor that measures an actual turning angle of the vehicle (100;100v) and outputs the actual turning angle as the sensor information, and
the detection unit (116;211) detects using the actual turning angle that the wheel is likely to deviate from the roller (91).

7. The vehicle (100;100v) inspection system (50;50v) according to claim 1, wherein
the sensor includes a laser sensor that detects that an object has entered a predetermined detection range, and outputs a detection result as the sensor information, and
the detection unit (116;211) detects using the detection result that the wheel is likely to deviate from the roller (91).

8. The vehicle (100;100v) inspection system (50;50v) according to claim 1, wherein
the sensor includes a photoelectric sensor that detects that an object exists on a beam by emitting the beam to a predetermined position, and outputs a detection result as the sensor information, and
the detection unit (116;211) detects using the detection result that the wheel is likely to deviate from the roller (91).

9. The vehicle (100;100v) inspection system (50;50v) according to claim 1, wherein
the sensor includes a sensor that outputs the sensor information usable for acquiring a position of the vehicle (100;100v), and
the detection unit (116;211) detects using the position of the vehicle (100;100v) acquired by using the sensor information that the wheel is likely to deviate from the roller (91).

10. The vehicle (100;100v) inspection system (50;50v) according to claim 1, wherein
the sensor comprises a plurality of sensors, and
the detection unit (116;211) detects using the sensor information output from each of the plurality of sensors that the wheel is likely to deviate from the roller (91).

11. A control method comprising:
detecting that a wheel is likely to deviate from a roller (91) that rotates while supporting the wheel of a vehicle (100;100v) being capable of running by unmanned driving; and
controlling, when it is detected that the wheel is likely to deviate from the roller (91), at least one of wheel circumferential speed and roller (91) circumferential speed to reduce a difference between the wheel circumferential speed and the roller (91) circumferential speed, the wheel circumferential speed being circumferential speed of the wheel and the roller (91) circumferential speed being circumferential speed of the roller (91).

## Patentansprüche

1. Fahrzeug- (100; 100v) Prüfsystem (50; 50v), das umfasst:
ein Fahrzeug (100; 100v), das im fahrerlosen Betrieb fahren kann;
eine Prüfanlage (900; 900v), die eine Rolle (91) umfasst, die sich dreht, während sie ein Rad des Fahrzeugs (100; 100v) trägt;
einen Sensor, der Sensorinformationen ausgibt, um zu erfassen, dass das Rad wahrscheinlich von der Rolle (91) abweichen wird;
eine Erfassungseinheit (116; 211), die anhand der Sensorinformationen erfasst, dass das Rad wahrscheinlich von der Rolle (91) abweichen wird; und
eine Steuereinheit, die, wenn erfasst wird, dass das Rad wahrscheinlich von der Rolle (91) abweichen wird, zumindest entweder die Radumfangsgeschwindigkeit oder die Umfangsgeschwindigkeit der Rolle (91) so steuert, dass eine Differenz zwischen der Radumfangsgeschwindigkeit und der Umfangsgeschwindigkeit der Rolle (91) verringert wird, wobei die Radumfangsgeschwindigkeit die Umfangsgeschwindigkeit des Rades ist, wobei die Umfangsgeschwindigkeit der Rolle (91) die Umfangsgeschwindigkeit der Rolle (91) ist.

2. Fahrzeug- (100; 100v) Prüfsystem (50; 50v) nach Anspruch 1, wobei, wenn erfasst wird, dass das Rad wahrscheinlich von der Rolle (91) abweichen wird, weil die Drehung der Rolle (91) während einer Prüfung gestoppt wird, bei der die Rolle (91) durch die Antriebskraft des Rades gedreht wird, die Steuereinheit die Differenz zwischen der Radumfangsgeschwindigkeit und der Umfangsgeschwindigkeit der Rolle (91) verringert, indem sie die Radumfangsgeschwindigkeit senkt.

3. Fahrzeug- (100; 100v) Prüfsystem (50; 50v) nach Anspruch 1, wobei, wenn erfasst wird, dass das Rad wahrscheinlich von der Rolle (91) abweichen wird, weil es sich während der Prüfung, bei der das Rad durch die Antriebskraft der Rolle (91) gedreht wird, mit einer Umfangsgeschwindigkeit dreht, die von einer vorgegebenen Referenz-Umfangsgeschwindigkeit abweicht, die Steuereinheit die Differenz zwischen der Radumfangsgeschwindigkeit und der Umfangsgeschwindigkeit der Rolle (91) verringert, indem sie die Umfangsgeschwindigkeit der Rolle (91) entsprechend der Radumfangsgeschwindigkeit steuert.

4. Fahrzeug- (100; 100v) Prüfsystem (50; 50v) nach Anspruch 1, wobei, wenn erfasst wird, dass das Rad wahrscheinlich von der Rolle (91) abweichen wird, die Steuereinheit die Differenz zwischen der Radumfangsgeschwindigkeit und der Umfangsgeschwindigkeit der Rolle (91) verringert, indem sie die Umfangsgeschwindigkeit eines Steuerziels, bei dem es sich um das Rad oder die Rolle (91) so steuert, dass die Änderungsrate der Umfangsgeschwindigkeit des Steuerziels innerhalb eines vorgegebenen Referenzbereichs liegt.

5. Fahrzeug- (100; 100v) Prüfsystem (50; 50v) nach Anspruch 1, wobei,
der Sensor einen Beschleunigungssensor (140) umfasst, der die Beschleunigung des Fahrzeugs (100; 100v) misst und die Beschleunigung als Sensorinformationen ausgibt, und
die Erfassungseinheit (116; 211) anhand der Beschleunigung erfasst, dass das Rad wahrscheinlich von der Rolle (91) abweichen wird.

6. Fahrzeug- (100; 100v) Prüfsystem (50; 50v) nach Anspruch 1, wobei,
der Sensor einen Lenkwinkelsensor umfasst, der einen tatsächlichen Lenkwinkel des Fahrzeugs (100; 100v) misst und den tatsächlichen Lenkwinkel als Sensorinformationen ausgibt, und
die Erfassungseinheit (116; 211) anhand des tatsächlichen Lenkwinkels erfasst, dass das Rad wahrscheinlich von der Rolle (91) abweichen wird.

7. Fahrzeug- (100; 100v) Prüfsystem (50; 50v) nach Anspruch 1, wobei,
der Sensor einen Lasersensor umfasst, der erfasst, dass ein Objekt in einen vorbestimmten Erfassungsbereich eingetreten ist, und ein Erfassungsergebnis als Sensorinformationen ausgibt, und
die Erfassungseinheit (116; 211) anhand des Erfassungsergebnisses erfasst, dass das Rad wahrscheinlich von der Rolle (91) abweichen wird.

8. Fahrzeug- (100; 100v) Prüfsystem (50; 50v) nach Anspruch 1, wobei,
der Sensor einen fotoelektrischen Sensor umfasst, der durch Aussenden eines Strahls auf eine vorbestimmte Position erfasst, dass sich ein Objekt im Strahl befindet, und ein Erfassungsergebnis als Sensorinformationen ausgibt, und
die Erfassungseinheit (116; 211) anhand des Erfassungsergebnisses erfasst, dass das Rad wahrscheinlich von der Rolle (91) abweichen wird.

9. Fahrzeug- (100; 100v) Prüfsystem (50; 50v) nach Anspruch 1, wobei,
der Sensor einen Sensor umfasst, der die Sensorinformationen ausgibt, die zur Erfassung einer Position des Fahrzeugs (100; 100v) verwendbar sind, und
die Erfassungseinheit (116; 211) anhand der unter Verwendung der Sensorinformationen erfassten Position des Fahrzeugs (100; 100v) erkennt, dass das Rad wahrscheinlich von der Rolle (91) abweichen wird.

10. Fahrzeug- (100; 100v) Prüfsystem (50; 50v) nach Anspruch 1, wobei,
der Sensor eine Vielzahl von Sensoren umfasst und
die Erfassungseinheit (116; 211) anhand der von jedem der Vielzahl von Sensoren ausgegebenen Sensorinformationen erkennt, dass das Rad wahrscheinlich von der Rolle (91) abweichen wird.

11. Steuerungsverfahren, das umfasst:
Erfassen, dass ein Rad wahrscheinlich von einer Rolle (91) abweichen wird, die sich dreht, während sie das Rad eines Fahrzeugs (100; 100v) trägt, das im fahrerlosen Fahrbetrieb fahren kann; und
Steuern, wenn erfasst wird, dass das Rad wahrscheinlich von der Rolle (91) abweichen wird, zumindest entweder der Radumfangsgeschwindigkeit oder der Umfangsgeschwindigkeit der Rolle (91), so dass eine Differenz zwischen der Radumfangsgeschwindigkeit und der Umfangsgeschwindigkeit der Rolle (91) verringert wird, wobei die Radumfangsgeschwindigkeit die Umfangsgeschwindigkeit des Rades und die Umfangsgeschwindigkeit der Rolle (91) die Umfangsgeschwindigkeit der Rolle (91) ist.

## Revendications

1. Système d'inspection (50 ; 50v) d'un véhicule (100 ; 100v) comprenant :
un véhicule (100 ; 100v) capable de fonctionner sans pilote,
une installation d'inspection (900 ; 900v) qui comporte un rouleau (91) qui tourne tout en supportant une roue du véhicule (100 ; 100v),
un capteur qui délivre des informations de capteur pour détecter que la roue est susceptible de dévier du rouleau (91),
une unité de détection (116 ; 211) qui détecte, à l'aide des informations de capteur, que la roue est susceptible de dévier du rouleau (91), et
une unité de commande qui, lorsqu'il a été détecté que la roue est susceptible de dévier du rouleau (91), commande la vitesse circonférentielle de la roue et/ou la vitesse circonférentielle du rouleau (91) pour réduire une différence entre la vitesse circonférentielle de la roue et la vitesse circonférentielle du rouleau (91), la vitesse circonférentielle de la roue étant la vitesse circonférentielle de la roue, la vitesse circonférentielle du rouleau (91) étant la vitesse circonférentielle du rouleau (91).

2. Système d'inspection (50 ; 50v) d'un véhicule (100 ; 100v) selon la revendication 1, dans lequel, lorsqu'il a été détecté que la roue est susceptible de dévier du rouleau (91) du fait de l'arrêt de la rotation du rouleau (91) lors de l'inspection pendant laquelle le rouleau (91) tourne sous l'effet de la force motrice de la roue, l'unité de commande réduit la différence entre la vitesse circonférentielle de la roue et la vitesse circonférentielle du rouleau (91) en diminuant la vitesse circonférentielle de la roue.

3. Système d'inspection (50 ; 50v) d'un véhicule (100 ; 100v) selon la revendication 1, dans lequel, lorsqu'il a été détecté que la roue est susceptible de dévier du rouleau (91) du fait d'une rotation de la roue à une vitesse circonférentielle différente d'une vitesse circonférentielle de référence prédéterminée lors de l'inspection pendant laquelle la roue tourne sous l'effet de la force motrice du rouleau (91), l'unité de commande réduit la différence entre la vitesse circonférentielle de la roue et la vitesse circonférentielle du rouleau (91) en commandant la vitesse circonférentielle du rouleau (91) en fonction de la vitesse circonférentielle de la roue.

4. Système d'inspection (50 ; 50v) d'un véhicule (100 ; 100v) selon la revendication 1, dans lequel, lorsqu'il a été détecté que la roue est susceptible de dévier du rouleau (91), l'unité de commande réduit la différence entre la vitesse circonférentielle de la roue et la vitesse circonférentielle du rouleau (91) en commandant la vitesse circonférentielle d'une cible de commande consistant en la roue ou le rouleau (91) de façon que le taux de variation de la vitesse circonférentielle de la cible de commande se situe dans une plage de référence prédéterminée.

5. Système d'inspection (50 ; 50v) d'un véhicule (100 ; 100v) selon la revendication 1, dans lequel
le capteur comprend un capteur d'accélération (140) qui mesure l'accélération du véhicule (100 ; 100v) et délivre l'accélération en tant qu'information de capteur, et
l'unité de détection (116 ; 211) détecte, à l'aide de l'accélération, que la roue est susceptible de dévier du rouleau (91).

6. Système d'inspection (50 ; 50v) d'un véhicule (100 ; 100v) selon la revendication 1, dans lequel
le capteur comprend un capteur d'angle de rotation qui mesure un angle de rotation réel du véhicule (100 ; 100v) et délivre l'angle de rotation réel en tant qu'information de capteur, et
l'unité de détection (116 ; 211) détecte, à l'aide de l'angle de rotation réel, que la roue est susceptible de dévier du rouleau (91).

7. Système d'inspection (50 ; 50v) d'un véhicule (100 ; 100v) selon la revendication 1, dans lequel
le capteur comprend un capteur laser qui détecte qu'un objet est entré dans une plage de détection prédéterminée et délivre un résultat de détection en tant qu'information de capteur, et
l'unité de détection (116 ; 211) détecte, à l'aide du résultat de détection, que la roue est susceptible de dévier du rouleau (91).

8. Système d'inspection (50 ; 50v) d'un véhicule (100 ; 100v) selon la revendication 1, dans lequel
le capteur comprend un capteur photoélectrique qui détecte la présence d'un objet sur un faisceau par émission du faisceau vers une position prédéterminée et qui délivre un résultat de détection en tant qu'information de capteur, et
l'unité de détection (116 ; 211) détecte, à l'aide du résultat de détection, que la roue est susceptible de dévier du rouleau (91).

9. Système d'inspection (50 ; 50v) d'un véhicule (100 ; 100v) selon la revendication 1, dans lequel
le capteur comprend un capteur qui délivre des informations de capteur permettant d'obtenir une position du véhicule (100 ; 100v), et
l'unité de détection (116 ; 211) détecte, à l'aide de la position du véhicule (100 ; 100v), obtenue au moyen des informations de capteur, que la roue est susceptible de dévier du rouleau (91).

10. Système d'inspection (50 ; 50v) d'un véhicule (100 ; 100v) selon la revendication 1, dans lequel
le capteur comprend une pluralité de capteurs, et
l'unité de détection (116 ; 211) détecte, à l'aide des informations de capteur délivrées par chacun des capteurs, que la roue est susceptible de dévier du rouleau (91).

11. Procédé de commande comprenant les étapes consistant à :
détecter que la roue est susceptible de dévier du rouleau (91) qui tourne tout en supportant une roue d'un véhicule (100 ; 100v) et capable de fonctionner sans pilote, et
commander, lorsqu'il a été détecté que la roue est susceptible de dévier du rouleau (91), la vitesse circonférentielle de la roue et/ou la vitesse circonférentielle du rouleau (91) pour réduire une différence entre la vitesse circonférentielle de la roue et la vitesse circonférentielle du rouleau (91), la vitesse circonférentielle de la roue étant la vitesse circonférentielle de la roue, la vitesse circonférentielle du rouleau (91) étant la vitesse circonférentielle du rouleau (91).
